# EUROPÄISCHE PATENTSCHRIFT

(11) **EP 0 626 539 B1**
(45) Veröffentlichungstag und Bekanntmachung des Hinweises auf die Patenterteilung: **09.07.1997**
(21) Anmeldenummer: 94104548.6
(22) Anmeldetag: 23.03.1994
(51) Int. Cl.: F23D 14/66, F23D 14/68, F23D 14/64, F23D 14/12

(54) **Mit Gas betriebener Infrarotstrahler für Heizzwecke**
Gas fueled infrared radiator for heating purposes
Radiateur à infrarouge aux fins de chauffage

(30) Priorität: 20.05.1993 DE 4316946
(43) Veröffentlichungstag der Anmeldung: 30.11.1994
(73) Patentinhaber: COLSMAN & Co. GmbH, D-58791 Werdohl-Kleinhammer (DE)
(72) Erfinder: Weber, Horst, D-58509 Lüdenscheid (DE); Normann, Alfred, D-56237 Alsbach (DE)
(74) Vertreter: Köchling, Conrad, Dipl.-Ing.

(56) Entgegenhaltungen:
- DE-A- 1 429 163
- FR-A- 2 238 521
- GB-A- 526 870
- US-A- 2 577 772
- PATENT ABSTRACTS OF JAPAN vol. 11, no. 388 (M-652) 18. Dezember 1987 & JP-A-62 155 494 (MIURA CO LTD) 10. Juli 1987

## Beschreibung

Die Erfindung betrifft einen mit Gas betriebenen Infrarotstrahler für Heizzwecke vornehmlich im Bauwesen und bei der Tieraufzucht mit einem Gasbrenner mit Luftzuführung und einem Glührohr oder dergleichen Glühelement gegebenenfalls mit Reflektor, wobei in der Luftzuführung ein Filterelement angeordnet ist. Ein solcher Infrarotstrahler ist z.B. aus der US-A-2 577 772 bekannt.

Derartige im Stand der Technik bekannte Infrarotstrahler werden mit Erdgas oder Flüssiggas betrieben. Dabei werden vorzugsweise temperaturbeständige Drahtgewebe, Lochbleche oder gelochte Keramikteile als Strahlerelemente eingesetzt. Die Oberflächentemperaturen liegen bei solchen Hellstrahlern oberhalb von 500°C, vorwiegend bei ca. 900°C. Dabei wird ein Teil der Strahlungsenergie sofort in Richtung der anzustrahlenden Fläche abgegeben.

Ein weiterer Anteil wird als Sekundärstrahlung vom Strahlergehäuse (Reflektor) in Richtung Zielfläche reflektiert. Der Rest wird als Verlustenergie von der Außenseite des Strahlergehäuses abgestrahlt. Der Wirkungsgrad von derzeit üblichen Infrarotstrahlern dieser Art liegt bei ca. 50 % und ist im Verhältnis zu modernen Heizungsanlagen sehr gering.

Die mit dem Gas zu mischende Verbrennungszuluft wird über ein Filterelement, das vor der Mischkammer angeordnet ist, angesaugt. In den Einsatzbereichen dieser Geräte, wie beispielsweise Baustellen und Tieraufzuchtstationen, ist sehr oft ein extrem hoher Staubanteil in der Ansaugluft enthalten. Zusätzlich sind in Tieraufzuchtstationen sehr hohe Luftfeuchtegehalte vorhanden. Beide Belastungsarten führen zu einer schnellen Verminderung der freien Ansaugfläche der eingesetzten Filterelemente. Damit verbunden verändert sich das stöchiometrische Luft-Gas-Verhältnis. Ein erhöhter Ausstoß von Kohlenmonoxid ist die Folge. Dies kann beim Einsatz vieler Geräte in unzureichend mit Frischluft belüfteten Räumen zu Gesundheitsschädigungen oder in Extremfällen zum Tod von Mensch und Tier führen.

Da die Reinigung oder der Wechsel der Filterelemente z.B. während der Aufzuchtperiode von Tieren nur schwierig durchgeführt werden kann, ist diese Ausbildung nicht zufriedenstellend. Desweiteren entstehen fortlaufende Wartungskosten durch den notwendigen Ersatz der Filterelemente.

Ausgehend von diesem Stand der Technik liegt der Erfindung die Aufgabe zugrunde, einen Infrarotstrahler gattungsgemäßer Art zu schaffen, der eine wartungsarme Ansaugluftreinigung ermöglicht.

Zur Lösung dieser Aufgabe wird vorgeschlagen, daß der Luftzuführungskanal entlang eines sich beim Betrieb des Brenners erhitzenden Bereiches des Brenners geführt ist und daß in diesem Bereich das Filterelement angeordnet ist, welches hitzebeständige Filterkörper aufweist.

Durch diese Ausbildung wird eine Vorwärmung der Verbrennungszuluft und eine Reinigung der Filterkörper erreicht. Durch die Abwärme des Brenners erfolgt eine Aufheizung des Luftzuführungskanales und somit eine Aufheizung der durchströmenden Luft. Desweiteren werden durch diese Erwärmung des Luftzuführungskanales die in diesem angeordneten Filterelemente bei Betrieb des Brenners bis zur Rotglut erhitzt. Staubpartikel in der turbulenten Luftströmung im Bereich der Filterelemente kontaktieren die Filterelemente und verbrennen dabei. Zusätzlich wird durch die Aufheizung der Ansaugluft ihre relative Luftfeuchte herabgesetzt. Durch diese Ausbildung wird ein wartungsfreier Dauerbetrieb über einen längeren Zeitraum ermöglicht, beispielsweise von mindestens 50 Tagen. Zudem kann das Filterelement so ausgebildet sein, daß es eines Austausches nicht bedarf, so daß keine ständigen Betriebsund Wartungskosten bezüglich der Auswechslung des Filters entstehen. Durch die erfindungsgemäße Ausbildung ist sichergestellt, daß der CO-Gehalt auch nach längerem Dauerbetrieb deutlich unter dem Grenzwert von 0,1 % liegt. Zudem ist der Wirkungsgrad der Vorrichtung verbessert. Auch Kondensationserscheinungen im Bereich der Mischkammer und im Mischrohr, die durch die Kälteentwicklung bei der Entspannung der Verbrennungsgase (z.B. Propan, Butan, Erdgas) beim Ausströmen aus der Gasaustrittsdüse entsteht, können sicher unterbunden werden.

Eine bevorzugte Weiterbildung wird darin gesehen, daß der Luftzuführungskanal entlang der der Abstrahlfläche des Brenners abgewandten Seite des Brenners geführt ist und mit dieser in Berührungskontakt steht.

Desweiteren ist bevorzugt vorgesehen, daß ein Teil des Luftzuführungskanals das der Abstrahlfläche abgewandte Bodenteil des Glührohres oder des Glühelementes bildet.
Auch ist bevorzugt, daß das Filterelement aus hitzebeständigem Metall, insbesondere Stahl, oder anorganischem Material besteht.

Ferner ist bevorzugt vorgesehen, daß das Filterelement aus Maschengewebe, Lochblechen, porigen Filterplatten, Wabenkörpern oder dergleichen durchströmbaren Elementen besteht.

Eine besonders vorteilhafte Weiterbildung bei einem Infrarotstrahler, dessen Luftzuführungskanal und dessen Gasdüse in ein Injektorrohr münden, welches zur Mischkammer des Brenners führt, wird darin gesehen, daß mindestens ein Sekundärluftkanal den Luftzuführungskanal mit dem Mischrohr verbindet.

Diese Ausbildung führt zu einer Optimierung der Abgaswerte im Mischrohr, wobei über den einen oder auch mehrere zusätzliche Sekundärluftkanäle unter Ausnutzung der Strömungsenergie im Mischrohr beim Betrieb des Strahlers nach dem Injektorprinzip zusätzlich Verbrennungsluft zugeführt wird. Dies sorgt für eine intensive Vermischung des Gas-Luftgemisches unter zusätzlicher Sauerstoffanreicherung.

Eine weitere bevorzugte Ausführungsform wird darin gesehen, daß das Glühelement durch einen mit seiner Basisfläche an eine Wandung des Luftführungskanals angelegter Rinnenabschnitt mit halbkreisförmigem oder dreieckförmigem Querschnitt gebildet ist, oder als Halbkugelabschnitt, als Pyramide oder Pyramidenstumpf, Kegel oder Kegelstumpf ausgebildet ist.

Durch diese Ausbildung wird eine wesentlich höhere Primärstrahlung in Richtung der zu beheizenden Fläche erreicht, während die Wärmeabstrahlung in entgegengesetzter Richtung durch die dort befindliche relativ kleine Oberfläche verringert ist. Zur weiteren Verminderung der Wärmeverluste zu der Seite hin, die der zu beheizenden Fläche abgewandt ist, kann das Brennergehäuse innenseitig oder auch außenliegend mit hitzebeständigem Dämmstoff isoliert sein.

Die Erfindung ist nachstehend anhand von Ausführungsbeispielen näher erläutert.

Es zeigt:
- Fig. 1: einen erfindungsgemäßen Infrarotstrahler in Seitenansicht teilweise geschnitten;
- Fig. 2 bis Figur 9a: Glühelemente unterschiedlicher Ausführungsformen.

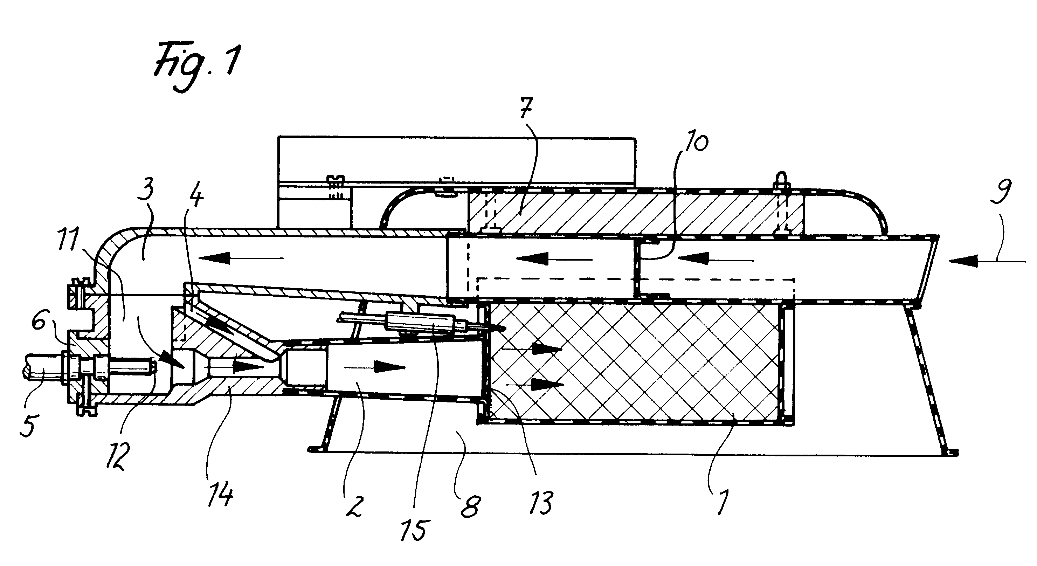

Der in Figur 1 dargestellte Infrarotbrenner wird mit Gas betrieben und dient für Heizzwecke insbesondere im Bauwesen und bei der Tieraufzucht. Der Gasbrenner besteht aus einem Brennergehäuse 8, welches gleichzeitig Reflektor ist. Durch dieses Gehäuse ist ein Luftzuführungskanal 3 an der in der Zeichnung oben befindlichen Seite des Gehäuses, die der Strahlenaustrittsseite abgewandt ist, angeordnet. Dieser Luftzuführungskanal 3 führt über eine Umlenkung 11 in dem Bereich der Gaseinspeisung. Die Gaseinspeisung erfolgt über die Gasaustrittsdüse 12, die mit einer Zündsicherung 5 gekoppelt ist. Von dort aus geht die Luftführung einschließlich der im Wege des Injektor-Prinzips mitgenommenen Gasführung über ein Injektorrohr 14 in ein Mischrohr 2 über. Das Mischrohr 2 endet in einem Glühgitter 13. An dieses Glühgitter schließt sich ein Glühelement 1 an, dessen Abstrahlfläche durch eine Gitterstruktur gebildet ist und nach unten in Zeichnungsfigur 1 gerichtet ist. Bei 9 ist der Lufteintritt des Luftzuführungsrohres 3 gezeigt. Im Luftzuführungsrohr ist oberhalb des Glühelementes 1 eines Anordnung von Filterelementen 10 als Luftfilter vorgenommen.

Vom Luftzuführungskanal 3 zweigt in der Zeichnungsfigur 1 gezeigter Sekundärluftkanal 4 ab, der unmittelbar in die Mischkammer 2 einmündet, wobei die über den Sekundärluftkanal 4 zugeführte Luft im Weg des Injektor-Prinzips bei Betrieb des Brenners angesaugt wird. Oberhalb des Luftzuführungsrohres 3 und oberhalb des Glühelementes 1 des Brenners ist noch eine Isolierung 7 aus hochtemperaturbeständigem Isoliermaterial angeordnet.

Beim Betrieb des Brenners wird die Abwärme an der Oberseite des Glühelementes 1 zur Aufheizung des Luftzuführungskanales 3 benutzt, so daß die dort durchströmende Luft erwärmt wird. Zudem wird hierdurch der ebenfalls oberhalb des Glühelementes 1 angeordnete Luftfilter bis zur Rotglut erhitzt, so daß im Luftfilter hängenbleibende Staubpartikel oder dergleichen verbrennen. Hierdurch wird erreicht, daß der freie Strömungsquerschnitt des Filterelementes ständig freigehalten wird. Das Filterelement kann dabei aus hitzebeständigem Stahl beispielsweise in Form von Maschengewebe, Lochblechen oder dergleichen bestehen. Es kann aber auch aus anorganischen Materialien wie Filterplatten, Wabenkörpern oder dergleichen bestehen.

In den Figuren 2 bis 9a sind unterschiedliche Formen von Glühelementen 1 gezeigt. Bei der Ausführungsform gemäß Figur 2 und 2a ist das Glühelement 1 in Form einer endseitig geschlossenen und in Einbaulage nach oben offenen Rinnen ausgebildet, wobei die in der Zeichnungsfigur 2a oben liegende Basisfläche durch den Ansaugkanal verschlossen ist.

Diese Form bewirkt im Gegensatz zu einem vollständig runden Körper kreisförmigen Querschnitts eine wesentlich höhere Primärstrahlung in Richtung der zu beheizenden Fläche. Die Wärmeabgabe nach oben wird durch die dorthin liegende verkleinerte Oberfläche der Oberseite verringert.

In Figur 3 und 3a ist eine ähnliche Rinnenform gezeigt, die im Querschnitt dreieckig ausgebildet ist. Die Schenkel des so gebildeten gleichschenkligen Dreieckes weisen zur Abstrahlfläche hin, während die Basis am Ansaugkanal 3 anliegt. Auch hierbei sind die Stirnenden des rinnenförmigen Strahlelementes durch ähnliche gitterförmige Strukturen verschlossen, die auch die Schenkel des Strahlelementes bilden.

Bei der Ausführungsform gemäß Figur 4 ist das Glühelement durch ein halbkugelförmigen Abschnitt gebildet, wodurch die Wärme gleichmäßig nach allen Seiten abstrahlen kann.

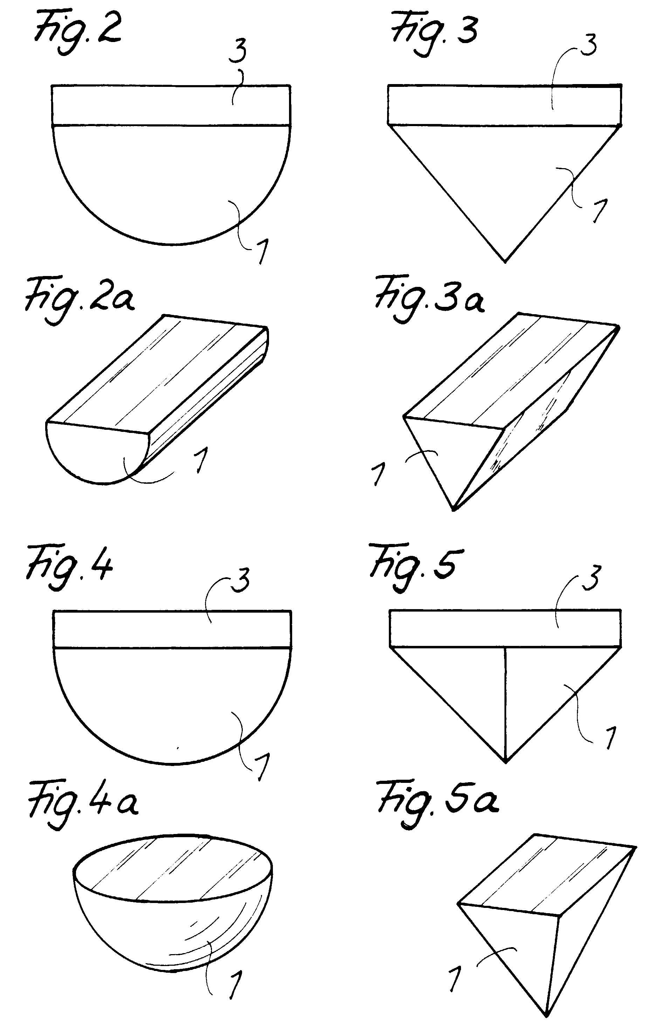

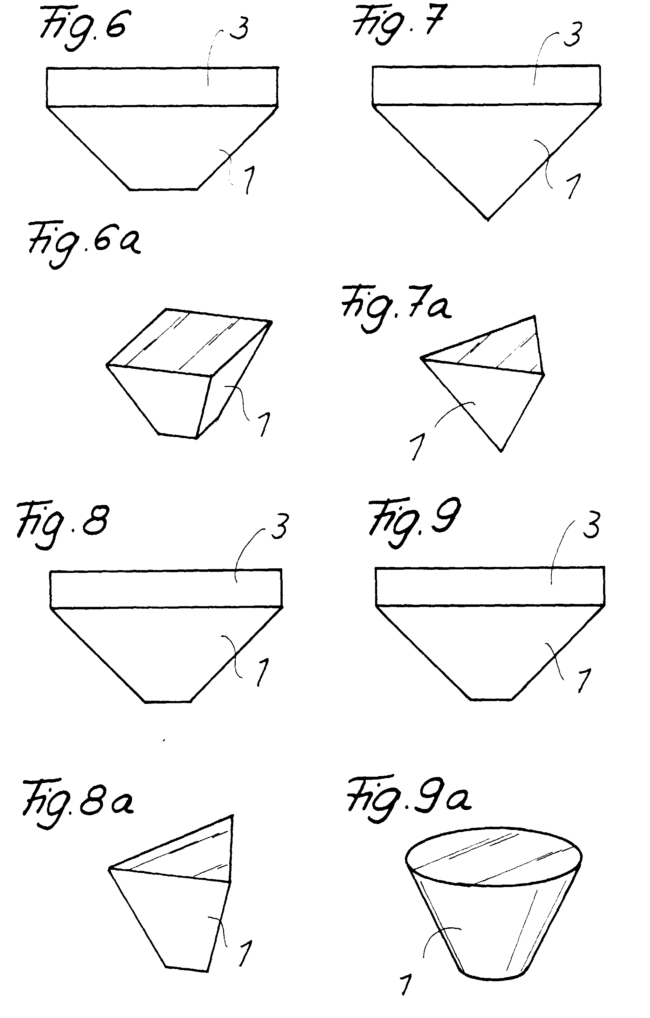

Bei der Ausführungsform nach Figur 5 und 5a weist das Glühelement die Form einer vierseitigen Pyramide auf, während bei der Ausführungsform nach Figur 6 die Form eines vierseitigen Pyramidenstumpfes gewählt ist. Bei der Ausführungsform nach Figur 7 und 7a ist die Form einer dreiseitigen Pyramide gewählt. Bei der Figur 8 ist die Form eines dreiseitigen Pyramidenstumpfes gewählt. Bei der Ausführungsform nach Figur 9 und 9a ist das Glühelement in Form eines Kegelstumpfes ausgebildet. Alle Ausführungsformen reduzieren die Abstrahlung zu der Fläche, die der zu beheizenden Fläche abgewandt ist.

Die Erfindung ist nicht auf die Ausführungsbeispiele beschränkt, sondern im Rahmen der Offenbarung vielfach variabel.

### Bezugszeichenliste

- 1: Glührohr
- 2: Mischrohr
- 3: Luftansaugkanal
- 4: Sekundärluftkanäle
- 5: Zündsicherung
- 6: Düsensteckhalter
- 7: Isolierung
- 8: Reflektor
- 9: Einlaß von 3
- 10: Luftfilter
- 11: Teil von 3
- 12: Gasaustrittsdüse
- 13: Glühgitter
- 14: Injektorrohr
- 15: Thermoelement

## Patentansprüche

1. Mit Gas betriebener Infrarotstrahler für Heizzwecke vornehmlich im Bauwesen und bei der Tieraufzucht mit einem Gasbrenner mit Luftzuführung und einem Glührohr oder dergleichen Glühelement gegebenenfalls mit Reflektor, wobei in der Luftzuführung ein Filterelement angeordnet ist, **dadurch gekennzeichnet, daß** der Luftzuführungskanal (3) entlang eines sich beim Betrieb des Brenners erhitzenden Bereiches des Brenners geführt ist und daß in diesem Bereich das Filterelement (10) angeordnet ist, welches hitzebeständige Filterkörper aufweist.

2. Infrarotstrahler nach Anspruch 1, **dadurch gekennzeichnet, daß** der Luftzuführungskanal (3) entlang der der Abstrahlfläche des Brenners abgewandten Seite des Brenners geführt ist und mit dieser in Berührungskontakt steht.

3. Infrarotstrahler nach Anspruch 1 oder 2, **dadurch gekennzeichnet, daß** ein Teil des Luftzuführungskanales (3) das der Abstrahlfläche abgewandte Bodenteil des Glührohres oder des Glühelementes (1) bildet.

4. Infrarotstrahler nach einem der Ansprüche 1 bis 3, **dadurch gekennzeichnet, daß** das Filterelement (10) aus hitzebeständigem Metall, insbesondere Stahl, oder anorganischem Material besteht.

5. Infrarotstrahler nach einem der Ansprüche 1 bis 4, **dadurch gekennzeichnet, daß** das Filterelement (10) aus Maschengewebe, Lochblechen, porigen Filterplatten, Wabenkörpern oder dergleichen durchströmbaren Elementen besteht.

6. Infrarotstrahler nach einem der Ansprüche 1 bis 5, wobei der Luftzuführungskanal und eine Gasdüse in ein Injektorrohr münden, welches zur Mischkammer des Brenners führt, **dadurch gekennzeichnet, daß** mindestens ein Sekundärluftkanal (4) den Luftzuführungskanal (3) mit dem Mischrohr (2) verbindet.

7. Infratrotstrahler nach einem der Ansprüche 1 bis 6, **dadurch gekennzeichnet, daß** das Glühelement (1) durch einen mit seiner Basisfläche an eine Wandung des Luftzuführungskanales (3) angelegten Rinnenabschnitt mit halbkreisförmigem oder dreieckförmigem Querschnitt gebildet ist, oder als Halbkugelabschnitt, als Pyramide oder Pyramidenstumpf, Kegel oder Kegelstumpf ausgebildet ist.

## Claims

1. Gas-operated infrared radiator for heating purposes, mainly in the building trade and in animal husbandry, having a gas burner with air supply and an incandescent tube or similar incandescent element, optionally with reflector, a filter element being disposed in the air supply, characterized in that the air supply duct (3) is routed along a burner region which heats up during the operation of the burner and in that the filter element (10), which has heat-resistant filter bcdies, is disposed in said region.

2. Infrared radiator according to Claim 1, characterized in that the air supply duct (3) is routed along that side of the burner which is remote from the radiating surface of the burner and is in contiguous contact with the latter.

3. Infrared radiator according to Claim 1 or 2, characterized in that a part of the air supply duct (3) forms that base part of the incandescent tube or of the incandescent element (1) which is remote from the radiating surface.

4. Infrared radiator according to one of Claims 1 to 3, characterized in that the filter element (10) is composed of heat-resistant metal, in particular steel, or of inorganic material.

5. Infrared radiator according to one of Claims 1 to 4, characterized in that the filter element (10) is composed of wire mesh, perforated metal sheets, porous filter plates, honeycomb bodies or similar elements through which flow can take place.

6. Infrared radiator according to one of Claims 1 to 5, wherein the air supply duct and a gas nozzle open into an injector tube which leads to the mixing chamber of the burner, characterized in that at least one secondary air duct (4) links the air supply duct (3) to the mixing tube (2).

7. Infrared radiator according to one of Claims 1 to 6, characterized in that the incandescent element (1) is formed by a trough segment which is mounted on a wall of the air supply duct (3) by means of its base and which has a semicircular or triangular cross section or is designed as hemispherical segment, as pyramid or truncated pyramid, cone or truncated cone.

## Revendications

1. Radiateur à infrarouge fonctionnant au gaz aux fins de chauffage, principalement dans le bâtiment et pour l'élevage d'animaux, avec un brûleur à gaz avec alimentation en air et avec un tube incandescent ou élément incandescent analogue, éventuellement avec réflecteur, un élément filtrant étant disposé dans l'alimentation en air, **caractérisé** en ce que le canal d'alimentation en air (3) est guidé le long d'une région du brûleur qui s'échauffe lors du fonctionnement du brûleur, et en ce que l'élément filtrant (10), qui présente des corps de filtration résistants à la chaleur, est disposé dans cette région.

2. Radiateur à infrarouge selon la revendication 1, **caractérisé** en ce que le canal d'alimentation en air (3) est guidé le long du côté du brûleur qui est opposé à la surface radiante du brûleur, et est en contact direct avec ce côté.

3. Radiateur à infrarouge selon la revendication 1 ou 2, **caractérisé** en ce qu'une partie du canal d'alimentation en air (3) forme la partie de fond, opposée à la surface radiante, du tube incandescent ou de l'élément incandescent (1).

4. Radiateur à infrarouge selon l'une des revendications 1 à 3, **caractérisé** en ce que l'élément filtrant (10) est réalisé en métal résistant à la chaleur, notamment en acier, ou en matériau inorganique.

5. Radiateur à infrarouge selon l'une des revendications 1 à 4, **caractérisé** en ce que l'élément filtrant (10) est constitué d'un tissu à mailles, de tôles perforées, de plaques de filtration poreuses, de corps alvéolaires ou d'éléments analogues pouvant être traversés par un flux.

6. Radiateur à infrarouge selon l'une des revendications 1 à 5, le canal d'alimentation en air et une buse à gaz débouchant dans un tube d'injecteur qui mène à la chambre de mélange du brûleur, **caractérisé** en ce qu'au moins un canal d'air secondaire (4) relie le canal d'alimentation en air (3) au tube de mélange (2).

7. Radiateur à infrarouge selon l'une des revendications 1 à 6, **caractérisé** en ce que l'élément incandescent (1) est formé par un tronçon de conduit de section semi-circulaire ou triangulaire qui est appliqué par sa face de base contre une paroi du canal d'alimentation en air (3), ou est réalisé sous forme de tronçon d'hémisphère, de pyramide ou de pyramide tronquée, de cône ou de cône tronqué.
